# EUROPEAN PATENT APPLICATION

(11) **EP 4 819 583 A1**
(43) Date of publication of application: **07.10.2026**
(21) Application number: 24906508.7
(22) Date of filing: 20.12.2024
(51) Int. Cl.: H04L 67/10

(54) **NETWORK CREATION METHOD BASED ON CLOUD MANAGEMENT PLATFORM AND CLOUD MANAGEMENT PLATFORM**

(30) Priority: 22.12.2023 CN 202311791810; 29.02.2024 CN 202410231518
(71) Applicant: Huawei Cloud Computing Technologies Co., Ltd., Gui'an New District, Guizhou 550025 (CN)
(72) Inventor: LI, Guoshuai, Guiyang, Guizhou 550025 (CN); GUO, Jianwei, Guiyang, Guizhou 550025 (CN); GAO, Zhonghua, Guiyang, Guizhou 550025 (CN)
(74) Representative: Pfenning, Meinig & Partner mbB
(86) International application number: PCT/CN2024/140854
(87) International publication number: WO 2025/131033

(57) **Abstract**

This application discloses a network creation method based on a cloud management platform and a cloud management platform, to improve communication latency between clusters of a tenant. The method in this application includes: When a tenant needs to create a site network, the tenant may send configuration information of the site network to a cloud management platform. Then, the cloud management platform may create, based on the configuration information, a first virtual gateway at a first access point selected by the tenant, and a second virtual gateway at a second access point selected by the tenant. Then, the cloud management platform may construct the site network between the first virtual gateway and the second virtual gateway. Because the first access point and a first cluster of the tenant are located in a first geographical area, and the second access point and a second cluster of the tenant are located in a second geographical area, the tenant enables the first cluster to access the site network through the first virtual gateway, and enables the second cluster to access the site network through the second virtual gateway. In this way, the first cluster and the second cluster may communicate with each other via the site network.

## Description

This application claims priorities to Chinese Patent Application No. 202311791810.9, filed with the China National Intellectual Property Administration on December 22, 2023 and entitled "NETWORK ARCHITECTURE BASED ON ACCESS GATEWAY DEVICE", and to Chinese Patent Application No. 202410231518.X, filed with the China National Intellectual Property Administration on February 29, 2024 and entitled "NETWORK CREATION METHOD BASED ON CLOUD MANAGEMENT PLATFORM AND CLOUD MANAGEMENT PLATFORM", both of which are incorporated herein by reference in their entireties.

### TECHNICAL FIELD

Embodiments of this application relate to the field of cloud technologies, and in particular, to a network creation method based on a cloud management platform and a cloud management platform.

### BACKGROUND

With the rapid development of cloud technologies, cloud vendors have constructed global cloud backbone networks for tenants, allowing the tenants to use these cloud backbone networks to implement intercommunication between multiple physical server clusters, thereby facilitating construction of distributed data centers for the tenants.

In related technologies, a cloud backbone network independently constructed by a cloud vendor usually provides multiple parent access points. Each parent access point is connected to multiple tenant-oriented sub-access points. Different parent access points are located in different geographical areas, and different sub-access points are also located in different geographical areas. When a tenant needs to connect two of its clusters, two sub-access points close to the two clusters may be selected from the available access points. The two clusters are then respectively connected to the two sub-access points, so that the two clusters are communicatively connected through the sub-access points, the parent access points, and the cloud backbone network in sequence.

In the foregoing process, traffic from the cluster of the tenant first flows into the sub-access points, then passes through the parent access points of the sub-access points, and finally enters the cloud backbone network. Therefore, the traffic cannot directly enter the cloud backbone network from the sub-access points, and must pass through the parent access points to enter the cloud backbone network, resulting in traffic detours around a specific geographical area. This causes high communication latency between the clusters of the tenant.

### SUMMARY

Embodiments of this application provide a network creation method based on a cloud management platform and a cloud management platform, enabling traffic between the clusters of a tenant to avoid detouring around a geographical area during communication, thereby improving communication latency between the clusters of the tenant.

A first aspect of embodiments of this application provides a network creation method based on a cloud management platform, where the cloud management platform used to implement the method manages multiple access points capable of constructing a site network of a tenant, the multiple access points are located in different geographical areas, and the method includes:

When the tenant needs to create the site network for a first cluster of the tenant and a second cluster of the tenant (where the first cluster and the second cluster each include multiple physical servers), the cloud management platform may provide a network creation interface for the tenant, and the network creation interface may present multiple access points to the tenant. After the tenant browses the multiple access points, because the tenant already knows that the first cluster is located in a first geographical area and the second cluster is located in a second geographical area, the tenant may select, from the multiple access points, a first access point that is also located in the first geographical area and a second access point that is also located in the second geographical area, and input configuration information of the site network to the network creation interface, where the configuration information indicates the first access point and the second access point. In this way, the cloud management platform may receive the configuration information of the site network via the network creation interface.

After obtaining the configuration information of the site network, the cloud management platform may determine, based on the configuration information, that the tenant needs to construct the site network between the first access point and the second access point. In this case, the cloud management platform may create a first virtual gateway dedicated to serving the tenant in a first physical gateway of the first access point, and create a second virtual gateway dedicated to serving the tenant in a second physical gateway of the second access point.

After obtaining the first virtual gateway and the second virtual gateway, the cloud management platform may construct the site network between the first virtual gateway and the second virtual gateway. Because the first access point at which the first virtual gateway is located and the first cluster of the tenant are both located in the first geographical area, and the second access point at which the second virtual gateway is located and the second cluster of the tenant are both located in the second geographical area, the tenant enables the first cluster to access the site network through the first virtual gateway, and enables the second cluster to access the site network through the second virtual gateway. In this way, the first cluster and the second cluster may communicate with each other via the site network.

It can be learned from the foregoing method that the cloud management platform may create virtual gateways (that is, the first virtual gateway and the second virtual gateway) at several access points (that is, the first access point and the second access point) independently selected by the tenant, to construct a tenant-dedicated site network between the virtual gateways at the several access points. The several access points are selected by the tenant based on geographical areas in which several clusters (that is, the first cluster and the second cluster) to be connected are located, in other words, geographical areas (that is, the first geographical area and the second geographical area) in which the several access points are located respectively overlap the geographical areas (that is, the first geographical area and the second geographical area) in which the several clusters of the tenant are located. Therefore, after the several clusters of the tenant access the site network of the tenant through the virtual gateways of the several access points respectively to implement intercommunication, traffic between the clusters does not need to detour around the geographical area during communication, thereby improving communication latency between the clusters of the tenant.

In a possible implementation, the configuration information includes an identifier of the site network, an identifier of the first access point, and an identifier of the second access point; the identifier of the site network includes an identity (identity, ID) of the site network and a structure of the site network; the identifier of the first access point includes an ID of the first geographical area, an ID of the first virtual gateway, and an ID of the first access point; and the identifier of the second access point includes an ID of the second geographical area, an ID of the second virtual gateway, and an ID of the second access point. In the foregoing implementation, the configuration information of the site network of the tenant may include the identifier of the site network of the tenant, the identifier of the first access point, and the identifier of the second access point. The identifier of the site network may include various information set by the tenant for the site network of the tenant, for example, an ID set by the tenant for the site network of the tenant and the structure set by the tenant for the site network of the tenant. The identifier of the first access point may include various information that may represent the first access point selected by the tenant, for example, the ID of the first geographical area in which the first access point is located, the ID of the first virtual gateway that may be created at the first access point, and the ID of the first access point. The identifier of the second access point may include various information that may represent the second access point selected by the tenant, for example, the ID of the second geographical area in which the second access point is located, the ID of the second virtual gateway that may be created at the second access point, and the ID of the second access point. It can be learned that because the configuration information of the site network of the tenant includes the foregoing various information, the configuration information may indicate the first access point and the second access point that are selected by the tenant to construct the site network of the tenant.

In a possible implementation, the structure of the site network is an end-to-end structure, and that the cloud management platform constructs the site network between the first virtual gateway and the second virtual gateway includes: The cloud management platform establishes a communication connection between the first virtual gateway and the second virtual gateway to obtain the site network. In the foregoing implementation, if the configuration information of the site network of the tenant indicates that the structure of the site network of the tenant is the end-to-end structure, the cloud management platform may use the first virtual gateway and the second virtual gateway as two endpoints of the site network of the tenant, to directly establish the communication connection between the first virtual gateway and the second virtual gateway, and obtain the site network of the tenant. It can be learned that the tenant may customize the site network of the tenant as the end-to-end structure, and the cloud management platform may construct the site network of the tenant based on a requirement of the tenant, to meet a setting requirement of the tenant for the site network and adapt to requirements of the tenant in different scenarios.

In a possible implementation, the structure of the site network is a mesh structure, the configuration information further indicates a third access point for constructing the site network, and that the cloud management platform constructs the site network between the first virtual gateway and the second virtual gateway includes: The cloud management platform establishes a communication connection between every two of the first virtual gateway, the second virtual gateway, and a third virtual gateway of the third access point to obtain the site network, where the third virtual gateway is used by a third cluster of the tenant to access the site network, the third cluster includes multiple physical servers, and the third cluster is located in a third geographical area in which the third access point is located. In the foregoing implementation, if the configuration information of the site network of the tenant indicates that the structure of the site network of the tenant is the mesh structure, and the configuration information indicates the first access point and the second access point that are selected by the tenant to construct the site network, and also indicates the third access point that is selected by the tenant to construct the site network, the cloud management platform may further create the third virtual gateway in the third physical gateway of the third access point. In this case, the cloud management platform may use every two of the first virtual gateway, the second virtual gateway, and the third virtual gateway as endpoints for arbitrary intercommunication in the site network of the tenant, to establish the communication connection between every two of the first virtual gateway, the second virtual gateway, and the third virtual gateway, and obtain the site network of the tenant. Subsequently, the tenant enables the first cluster to access the site network through the first virtual gateway, enables the second cluster to access the site network through the second virtual gateway, and enables the third cluster to access the site network through the third virtual gateway. In this way, the first cluster, the second cluster, and the third cluster may communicate with each other via the site network. It can be learned that the tenant may customize the site network of the tenant as the mesh structure, and the cloud management platform may construct the site network of the tenant based on a requirement of the tenant, to meet a setting requirement of the tenant for the site network and adapt to requirements of the tenant in different scenarios.

In a possible implementation, the structure of the site network is a hybrid structure, the configuration information further indicates a third access point for constructing the site network, and that the cloud management platform constructs the site network between the first virtual gateway and the second virtual gateway includes: The cloud management platform establishes a communication connection between the first virtual gateway and the second virtual gateway, and a communication connection between the second virtual gateway and a third virtual gateway of the third access point, to obtain the site network, where the third virtual gateway is used by a third cluster of the tenant to access the site network, the third cluster includes multiple physical servers, and the third cluster is located in a third geographical area in which the third access point is located. In the foregoing implementation, if the configuration information of the site network of the tenant indicates that the structure of the site network of the tenant is the hybrid structure, and the configuration information indicates the first access point and the second access point that are selected by the tenant to construct the site network, and also indicates the third access point that is selected by the tenant to construct the site network, the cloud management platform may further create the third virtual gateway in the third physical gateway of the third access point. In this case, the cloud management platform may use the first virtual gateway, the second virtual gateway, and the third virtual gateway as endpoints sequentially connected in the site network of the tenant, to establish the communication connection between the first virtual gateway and the second virtual gateway, and the communication connection between the second virtual gateway and the third virtual gateway, and obtain the site network of the tenant. Subsequently, the tenant enables the first cluster to access the site network through the first virtual gateway, enables the second cluster to access the site network through the second virtual gateway, and enables the third cluster to access the site network through the third virtual gateway. In this way, the first cluster, the second cluster, and the third cluster may communicate with each other via the site network. It can be learned that the tenant may customize the site network of the tenant as the hybrid structure, and the cloud management platform may construct the site network of the tenant based on a requirement of the tenant, to meet a setting requirement of the tenant for the site network and adapt to requirements of the tenant in different scenarios.

In a possible implementation, the structure of the site network is a star structure, the configuration information further indicates a third access point for constructing the site network, and that the cloud management platform constructs the site network between the first virtual gateway and the second virtual gateway includes: The cloud management platform establishes a communication connection between the first virtual gateway and the second virtual gateway, and a communication connection between the first virtual gateway and a third virtual gateway of the third access point, to obtain the site network, where the third virtual gateway is used by a third cluster of the tenant to access the site network, the third cluster includes multiple physical servers, and the third cluster is located in a third geographical area in which the third access point is located. In the foregoing implementation, if the configuration information of the site network of the tenant indicates that the structure of the site network of the tenant is the star structure, and the configuration information indicates the first access point and the second access point that are selected by the tenant to construct the site network, and also indicates the third access point that is selected by the tenant to construct the site network, the cloud management platform may further create the third virtual gateway in the third physical gateway of the third access point. In this case, the cloud management platform may use the first virtual gateway as a central point in the site network of the tenant, and use the second virtual gateway and the third virtual gateway as extension points in the site network, to establish the communication connection between the first virtual gateway and the second virtual gateway, and the communication connection between the first virtual gateway and the third virtual gateway, and obtain the site network of the tenant. Subsequently, the tenant enables the first cluster to access the site network through the first virtual gateway, enables the second cluster to access the site network through the second virtual gateway, and enables the third cluster to access the site network through the third virtual gateway. In this way, the first cluster, the second cluster, and the third cluster may communicate with each other via the site network. It can be learned that the tenant may customize the site network of the tenant as the star structure, and the cloud management platform may construct the site network of the tenant based on a requirement of the tenant, to meet a setting requirement of the tenant for the site network and adapt to requirements of the tenant in different scenarios.

In a possible implementation, communication connections between the first virtual gateway, the second virtual gateway, and the third virtual gateway are all implemented based on a cloud backbone network.

In a possible implementation, the first access point and the second access point are any one of the following: a region, an availability zone, a data center, and an equipment room.

A second aspect of embodiments of this application provides a cloud management platform. The cloud management platform is configured to manage multiple access points capable of constructing a site network of a tenant, the multiple access points are located in different geographical areas, and the cloud management platform includes: a receiving module, configured to receive, via a network creation interface, configuration information of the site network sent by the tenant, where the configuration information indicates a first access point and a second access point that are selected by the tenant from the multiple access points to construct the site network; a creation module, configured to create, based on the configuration information, a first virtual gateway of the tenant in a first physical gateway of the first access point, and a second virtual gateway of the tenant in a second physical gateway of the second access point; and a construction module, configured to construct the site network between the first virtual gateway and the second virtual gateway, where the first virtual gateway is used by a first cluster of the tenant to access the site network, the second virtual gateway is used by a second cluster of the tenant to access the site network, the first cluster and the second cluster each include multiple physical servers, the first cluster is located in a first geographical area in which the first access point is located, and the second cluster is located in a second geographical area in which the second access point is located.

In a possible implementation, the configuration information includes an identifier of the site network, an identifier of the first access point, and an identifier of the second access point; the identifier of the site network includes an identity (ID) of the site network and a structure of the site network; the identifier of the first access point includes an ID of the first geographical area, an ID of the first virtual gateway, and an ID of the first access point; and the identifier of the second access point includes an ID of the second geographical area, an ID of the second virtual gateway, and an ID of the second access point.

In a possible implementation, the structure of the site network is an end-to-end structure, and the construction module is configured to establish a communication connection between the first virtual gateway and the second virtual gateway to obtain the site network.

In a possible implementation, the structure of the site network is a mesh structure, the configuration information further indicates a third access point for constructing the site network, and the construction module is configured to establish a communication connection between every two of the first virtual gateway, the second virtual gateway, and a third virtual gateway of the third access point to obtain the site network, where the third virtual gateway is used by a third cluster of the tenant to access the site network, the third cluster includes multiple physical servers, and the third cluster is located in a third geographical area in which the third access point is located.

In a possible implementation, the structure of the site network is a hybrid structure, the configuration information further indicates a third access point for constructing the site network, and the construction module is configured to establish a communication connection between the first virtual gateway and the second virtual gateway, and a communication connection between the second virtual gateway and a third virtual gateway of the third access point, to obtain the site network, where the third virtual gateway is used by a third cluster of the tenant to access the site network, the third cluster includes multiple physical servers, and the third cluster is located in a third geographical area in which the third access point is located.

In a possible implementation, the structure of the site network is a star structure, the configuration information further indicates a third access point for constructing the site network, and the construction module is configured to establish a communication connection between the first virtual gateway and the second virtual gateway, and a communication connection between the first virtual gateway and a third virtual gateway of the third access point, to obtain the site network, where the third virtual gateway is used by a third cluster of the tenant to access the site network, the third cluster includes multiple physical servers, and the third cluster is located in a third geographical area in which the third access point is located.

In a possible implementation, the communication connection is implemented based on a cloud backbone network.

In a possible implementation, the first access point and the second access point are any one of the following: a region, an availability zone, a data center, and an equipment room.

A third aspect of embodiments of this application provides a compute device cluster. The compute device cluster includes at least one compute device, and each compute device includes a processor and a memory. The memory is configured to store instructions. The processor is configured to enable, according to the instructions, the compute device cluster to perform the method according to any one of the first aspect or the possible implementations of the first aspect.

A fourth aspect of embodiments of this application provides a computer storage medium. The computer storage medium stores one or more instructions. When the instructions are executed by one or more computers, the one or more computers are enabled to perform the method according to any one of the first aspect or the possible implementations of the first aspect.

A fifth aspect of embodiments of this application provides a computer program product. The computer program product stores instructions, and when the instructions are executed by a computer, the computer is enabled to perform the method according to any one of the first aspect or the possible implementations of the first aspect.

In embodiments of this application, when the tenant needs to create the site network for the first cluster of the tenant and the second cluster of the tenant, the tenant may input the configuration information of the site network to the network creation interface provided by the cloud management platform, so that the cloud management platform may receive the configuration information of the site network via the network creation interface, where the configuration information indicates the first access point and the second access point that are selected by the tenant from the multiple access points. Then, the cloud management platform may create, based on the configuration information, the first virtual gateway dedicated to serving the tenant in the first physical gateway of the first access point, and the second virtual gateway dedicated to serving the tenant in the second physical gateway of the second access point. Then, the cloud management platform may construct the tenant-dedicated site network between the first virtual gateway and the second virtual gateway. Because the first access point at which the first virtual gateway is located and the first cluster of the tenant are both located in the first geographical area, and the second access point at which the second virtual gateway is located and the second cluster of the tenant are both located in the second geographical area, the tenant enables the first cluster to access the site network through the first virtual gateway, and enables the second cluster to access the site network through the second virtual gateway. In this way, the first cluster and the second cluster may communicate with each other via the site network. In the foregoing process, the cloud management platform may create virtual gateways (that is, the first virtual gateway and the second virtual gateway) at several access points (that is, the first access point and the second access point) independently selected by the tenant, to construct a tenant-dedicated site network between the virtual gateways at the several access points. The several access points are selected by the tenant based on geographical areas in which several clusters (that is, the first cluster and the second cluster) to be connected are located, in other words, geographical areas (that is, the first geographical area and the second geographical area) in which the several access points are located respectively overlap the geographical areas (that is, the first geographical area and the second geographical area) in which the several clusters of the tenant are located. Therefore, after the several clusters of the tenant access the site network of the tenant through the virtual gateways of the several access points respectively to implement intercommunication, traffic between the clusters does not need to detour around the geographical area during communication, thereby improving communication latency between the clusters of the tenant.

### BRIEF DESCRIPTION OF DRAWINGS

FIG. 1 is a diagram of a structure of a cloud service system according to an embodiment of this application;
FIG. 2 is a diagram of multiple access points according to an embodiment of this application;
FIG. 3 is a diagram of another structure of a cloud service system according to an embodiment of this application;
FIG. 4 is a schematic flowchart of a network creation method based on a cloud management platform according to an embodiment of this application;
FIG. 5 is a diagram of a tenant interface according to an embodiment of this application;
FIG. 6 is another diagram of a tenant interface according to an embodiment of this application;
FIG. 7 is another diagram of a tenant interface according to an embodiment of this application;
FIG. 8 is another diagram of a tenant interface according to an embodiment of this application;
FIG. 9 is a diagram of a site network according to an embodiment of this application;
FIG. 10 is another diagram of a site network according to an embodiment of this application;
FIG. 11 is another diagram of a site network according to an embodiment of this application;
FIG. 12 is another diagram of a site network according to an embodiment of this application;
FIG. 13 is a diagram of a structure of a cloud management platform according to an embodiment of this application;
FIG. 14 is a diagram of a structure of a compute device according to an embodiment of this application;
FIG. 15 is a diagram of a structure of a compute device cluster according to an embodiment of this application; and
FIG. 16 is a diagram in which computer devices in a computer cluster are connected via a network according to an embodiment of this application.

### DESCRIPTION OF EMBODIMENTS

According to a network creation method based on a cloud management platform and a cloud management platform, traffic of the clusters does not need to detour around a geographical area during communication, thereby improving communication latency between the clusters of the tenant.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

With the rapid development of cloud technologies, cloud vendors construct backbone networks around the world for tenants to use, so that the tenants can use the backbone networks provided by the cloud vendors to implement intercommunication between multiple physical server clusters of the tenants, thereby facilitating construction of distributed data centers for the tenants.

In related technologies, the cloud backbone network independently constructed by the cloud vendor usually provides multiple parent access points, each parent access point is connected to multiple tenant-oriented sub-access points, different parent access points are located in different geographical areas, and different sub-access points are also located in different geographical areas. When a tenant needs to connect two clusters of the tenant, two sub-access points close to the two clusters may be selected from several access points, and the two clusters are respectively enabled to access the two sub-access points, so that the two clusters are communicatively connected through the sub-access points, parent access points, and the cloud backbone network in sequence. For example, it is assumed that a backbone network is open to a parent access point A located in Guangzhou and a parent access point B located in Hong Kong, the parent access point A is connected to a sub-access point A1 located in Tianhe District and a sub-access point A2 located in Yuexiu District, and the parent access point B is connected to a sub-access point B1 located in New Territories and a sub-access point B2 located in Kowloon. A cluster 1 of a tenant is close to the sub-access point A1, and a cluster 2 is close to the sub-access point B2, so that the cluster 1 is enabled to access the sub-access point A1, and the cluster 2 is enabled to access the sub-access point B2. In this way, the cluster 1 is communicatively connected to the cluster 2 through the sub-access point A2, the parent access point A, the backbone network, the parent access point B, and the sub-access point B2 in sequence.

In the foregoing process, traffic from the cluster of the tenant first flows into the sub-access points, then passes through the parent access points of the sub-access point, and finally enters the cloud backbone network. Therefore, the traffic cannot directly enter the cloud backbone network from the sub-access points, and must pass through the parent access points to enter the cloud backbone network, resulting in traffic detours around a specific geographical area. This causes high communication latency between the clusters of the tenant.

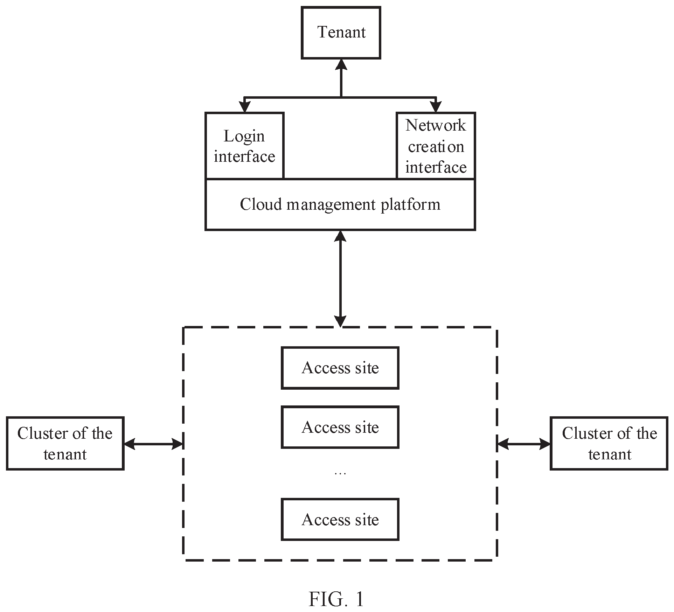

To resolve the foregoing problem, embodiments of this application provide a network creation method based on a cloud management platform. The method may be implemented by using a cloud service system. FIG. 1 is a diagram of a structure of a cloud service system according to an embodiment of this application. As shown in FIG. 1, the cloud service system includes infrastructure that may provide a cloud service and a cloud management platform that manages the infrastructure. The following separately describe the cloud management platform and the infrastructure.

The cloud management platform may perform overall management on the infrastructure in the entire cloud service system (for example, multiple access points included in the infrastructure, several access points are selected from the multiple access points based on an indication of a tenant, to construct a tenant-dedicated site network (site network) and the like), and may also be open to tenants outside the cloud service system and respond to their requests. For example, the cloud management platform may provide various interfaces such as a login interface and a network creation interface for a client of the tenant (for example, a terminal device used by the tenant or a browser on the terminal device) to perform access. The cloud management platform may perform identity authentication on the client of the tenant through the login interface. After the identity authentication succeeds, the client of the tenant may be allowed to log in to the cloud management platform. For another example, the cloud management platform may further provide, via the network creation interface, the client of the tenant with multiple access points capable of constructing the site network of the tenant, so that the client of the tenant presents the multiple access points to the tenant for viewing and selection, where the multiple access points are located in different geographical areas. For another example, the cloud management platform may further allow, via the network creation interface, the client of the tenant to send configuration information of the site network of the tenant to the cloud management platform. Then, the cloud management platform may determine, based on the configuration information, several access points selected by the tenant from the multiple access points, and construct the site network of the tenant between the several access points. In this way, several clusters of the tenant located in different geographical areas may access the site network through the several access points respectively, to implement intercommunication between clusters at different locations.

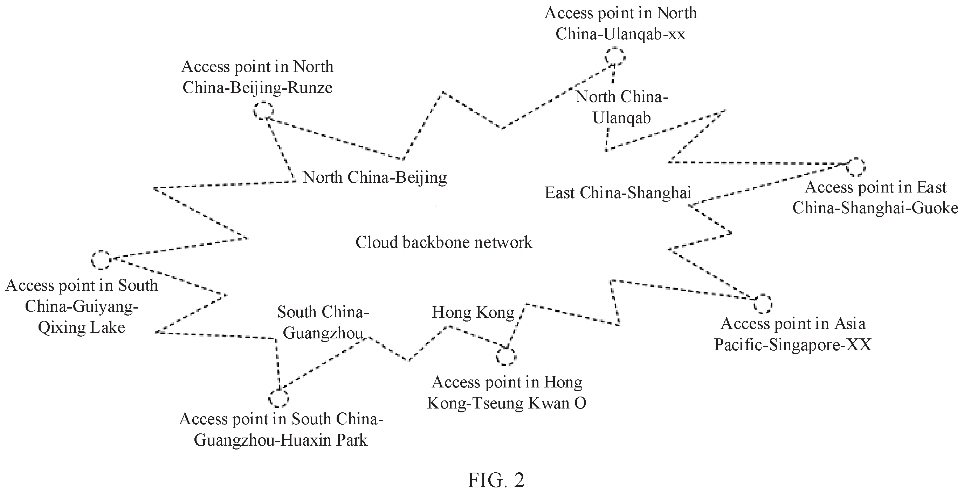

The infrastructure includes multiple access points (which may also be referred to as access sites) that directly access a cloud backbone network, and the multiple access points may be used to construct the site network of the tenant. It should be noted that the multiple access points are usually located in different geographical areas. For any access point in the multiple access points, a geographical area in which the access point is located may be a plate, or may be a city in a plate, or may be a district, a county, or a town in a city. A size of the geographical area in which the access point is located may be set based on an actual requirement, and is not limited herein. Because all the multiple access points directly access the cloud backbone network, a difference between a parent access point and a sub-access point is no longer formed based on a subordinate relationship of geographical areas for the multiple access points. In other words, a cloud backbone network plane directly opens a larger quantity of access points to the tenant, and a relationship between the multiple access points is peer-to-peer. For example, as shown in FIG. 2 (FIG. 2 is a diagram of multiple access points according to an embodiment of this application), cloud backbone networks around the world may provide a large quantity of access points in various places, for example, an access point located in Huaxin Park, Guangzhou, an access point located in Qixing Lake, Guiyang, and an access point located in Tseung Kwan O, Hong Kong.

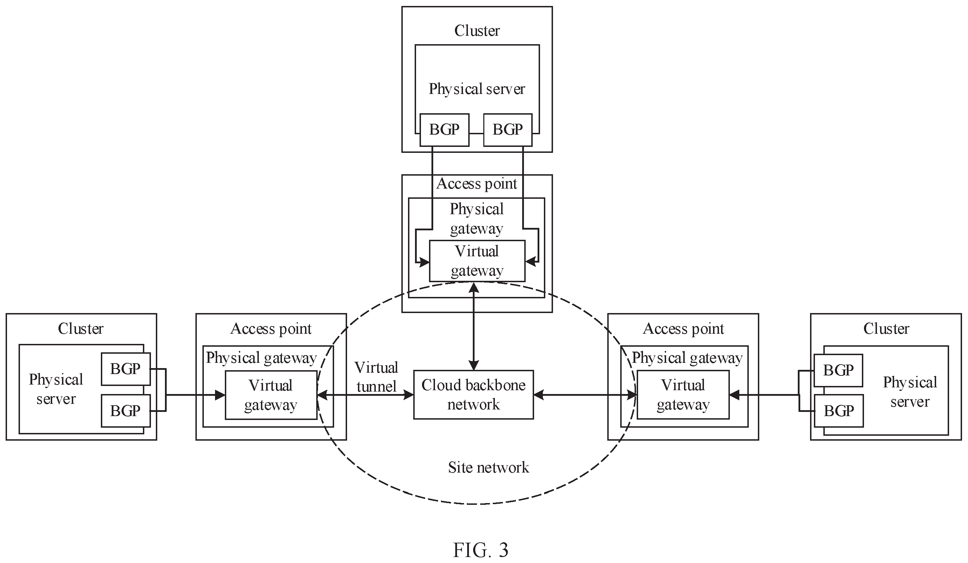

The following separately describes the multiple access points from the perspective of physical hardware and the perspective of virtual software. FIG. 3 is a diagram of another structure of a cloud service system according to an embodiment of this application. As shown in FIG. 3, for any access point in multiple access points, the access point may include multiple physical gateways, and each physical gateway has accessed a cloud backbone network. In other words, a physical tunnel (which may also be referred to as a physical communication channel) has been established between each physical gateway and the cloud backbone network. Therefore, when a tenant needs to create a tenant-dedicated site network, a cloud management platform may create, based on an indication of the tenant, a virtual gateway of the tenant in a physical gateway of an access point selected by the tenant, and another virtual gateway of the tenant in a physical gateway of another access point selected by the tenant, and construct a virtual tunnel (which may also be referred to as a virtual communication channel) for connecting the two virtual gateways between the two virtual gateways. The virtual tunnel is constructed based on physical tunnels between the physical gateways of the two virtual gateways and the cloud backbone network. In other words, the virtual tunnel passes through the cloud backbone network. Because the virtual tunnel exists, it may be considered that the two virtual gateways establish a communication connection. In this way, the cloud management platform creates the site network of the tenant, and the two virtual gateways may be used by two clusters (the two clusters are respectively located in geographical areas in which the two access points selected by the tenant are located) of the tenant to access the site network of the tenant, so that clusters of the tenant communicates with each other via the site network of the tenant (it should be understood that the foregoing example in which the tenant selects two access points to construct the site network of the tenant is merely used for description, in actual application, the tenant may alternatively select a larger quantity of access points to construct the site network of the tenant, and details are not described herein again).

In addition, the cloud management platform may create multiple virtual gateways for clusters of multiple tenants in any physical gateway of any access point, and these virtual gateways have the following multiple features: (1) In the multiple virtual gateways of the access point, one virtual gateway may serve a cluster of one tenant. In this way, the multiple tenants are isolated on different virtual gateways of a same access point. (2) In the multiple virtual gateways of the access point, each virtual gateway has a dedicated virtual tunnel to access the cloud backbone network. In this way, the multiple tenants can be isolated on the virtual tunnel. (3) For any virtual gateway in the multiple virtual gateways of the access point, any physical server in a cluster that accesses the virtual gateway may have two border gateway protocol (border gateway protocol, BGP) modules, and the two BGP modules (which may also be referred to as BGP peers (BGP peer)) enable the physical server to access the virtual gateway by using different network segments (for example, two network segments that are mutually active and standby). In this way, the cluster is enabled to access the virtual gateway to have a line disaster recovery capability. Further, the cloud management platform enables the virtual gateway to learn a network segment (route) of any physical server in the cluster that accesses the virtual gateway, to communicate with any physical server in the cluster. (4) For any virtual gateway in the multiple virtual gateways of the access point, the cloud management platform further enables the virtual gateway to have traffic collection and traffic rate limiting capabilities, so that the virtual gateway can have a traffic charging capability for a cluster of the tenant, and the like.

Further, the physical gateway is essentially a physical instance in the cloud service system, and the physical instance may be presented in multiple manners. For example, the physical instance may be a physical server selected by the cloud management platform. For another example, the physical instance may be a bare metal server selected by the cloud management platform. The virtual gateway in the physical gateway may also be referred to as a global dedicated gateway (global dedicated gateway, GDGW), and may also be referred to as a virtual routing forwarding (virtual routing forwarding, VRF) instance on the physical gateway. In other words, the virtual gateway is essentially a virtual instance in the cloud service system, and the virtual instance may be presented in multiple manners. For example, the virtual instance may be a virtual machine (virtual machine, VM) created on the physical server by the cloud management platform by using a virtualization technology. For another example, the virtual instance may be a docker container (docker) created on the physical server by the cloud management platform by using the virtualization technology. For another example, the virtual instance may be a micro virtual machine (microVM) created on the physical server by the cloud management platform by using the virtualization technology.

Further, for multiple access points, the multiple access points may be presented in multiple forms. For example, the multiple access points may be multiple regions (region) in infrastructure. For another example, the multiple access points may be multiple availability zones (availability zone) in the infrastructure. For another example, the multiple access points may be multiple data centers (data center, DC) in the infrastructure. For another example, the multiple access points may be multiple equipment rooms (room) in the infrastructure.

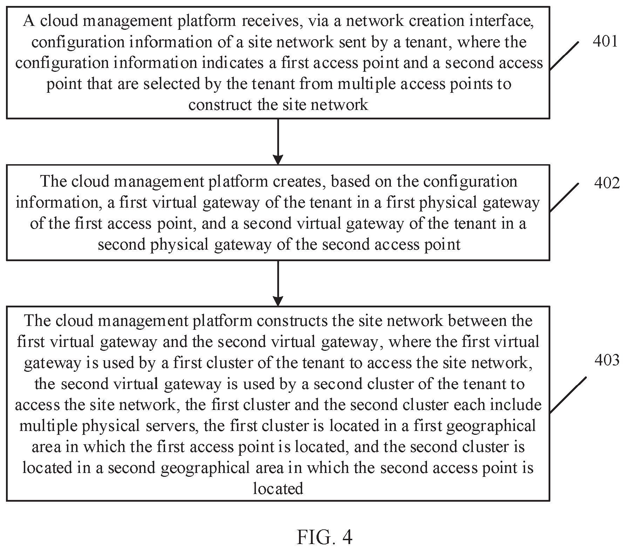

It can be learned from the foregoing cloud service system that for a tenant, the tenant usually has multiple clusters (which may also be referred to as multiple branches), each cluster may include multiple physical servers, and the multiple clusters of the tenant are usually located in different geographical areas. When the tenant needs to connect the multiple clusters, the tenant may select several access points from the multiple access points by using the cloud management platform, to create a tenant-dedicated site network. Because the site network is constructed based on virtual gateways of the several access points located in different geographical areas, the multiple clusters of the tenant may access the site network through nearest virtual gateways, to implement intercommunication between the multiple clusters. Therefore, the clusters of the tenant may directly access the site network of the tenant from nearest access points, to directly implement communication via the site network. In this way, traffic of the clusters does not need to detour around a specific geographical area, and communication latency between the clusters of the tenant can be reduced. To further understand the foregoing process, the following further describes the process with reference to FIG. 3. FIG. 4 is a schematic flowchart of a network creation method based on a cloud management platform according to an embodiment of this application. As shown in FIG. 4, the method may be implemented by using the cloud service system shown in FIG. 1. The cloud service system includes infrastructure configured to provide a cloud service and a cloud management platform configured to manage the infrastructure. The infrastructure includes multiple access points capable of constructing a site network of a tenant, the multiple access points are located in different geographical areas, and the method includes the following steps.

401: The cloud management platform receives, via a network creation interface, configuration information of the site network sent by the tenant, where the configuration information indicates a first access point and a second access point that are selected by the tenant from the multiple access points to construct the site network.

In this embodiment, when the tenant needs to create the site network for a first cluster of the tenant and a second cluster of the tenant, the cloud management platform may provide the network creation interface (for example, a site network name input field, a site network structure input field, and an access point information input field of the site network on a tenant interface) for a client of the tenant, and the network creation interface may present, to the tenant, the multiple access points available for the tenant to select. After the tenant browses, by using the client of the tenant, the multiple access points presented by the network creation interface, because the tenant has known that the first cluster is located in a first geographical area and the second cluster is located in a second geographical area, the tenant may select, from the multiple access points, the first access point that is also located in the first geographical area and the second access point that is also located in the second geographical area, and input, by using the client of the tenant, the configuration information of the site network of the tenant to the network creation interface, where the configuration information indicates the first access point and the second access point. In this way, the cloud management platform may receive the configuration information of the site network of the tenant via the network creation interface.

Specifically, the configuration information of the site network of the tenant may be presented in the following multiple manners.

(1) The configuration information of the site network of the tenant may include an identifier of the site network of the tenant, an identifier of the first access point, and an identifier of the second access point. It should be noted that, the identifier of the site network of the tenant is usually customized by the tenant and input to the network creation interface. The network creation interface may provide the tenant with identifiers of the multiple access points. The tenant may select and input the identifier of the first access point and the identifier of the second access point from the identifiers of the multiple access points presented by the network creation interface. Therefore, the network creation interface may generate the configuration information of the site network of the tenant based on the identifier of the site network, the identifier of the first access point, and the identifier of the second access point that are input by the tenant, and send the configuration information to the cloud management platform.

The identifier of the site network may include various information set by the tenant for the site network of the tenant, for example, an identity (identity document, ID) set by the tenant for the site network of the tenant and a structure (for example, an end-to-end structure) set by the tenant for the site network of the tenant. The identifier of the first access point may include various information that may represent the first access point selected by the tenant, for example, an ID of the first geographical area in which the first access point is located, an ID of a first virtual gateway that may be created at the first access point, and an ID of the first access point. The identifier of the second access point may include various information that may represent the second access point selected by the tenant, for example, an ID of the second geographical area in which the second access point is located, an ID of a second virtual gateway that may be created at the second access point, and an ID of the second access point.

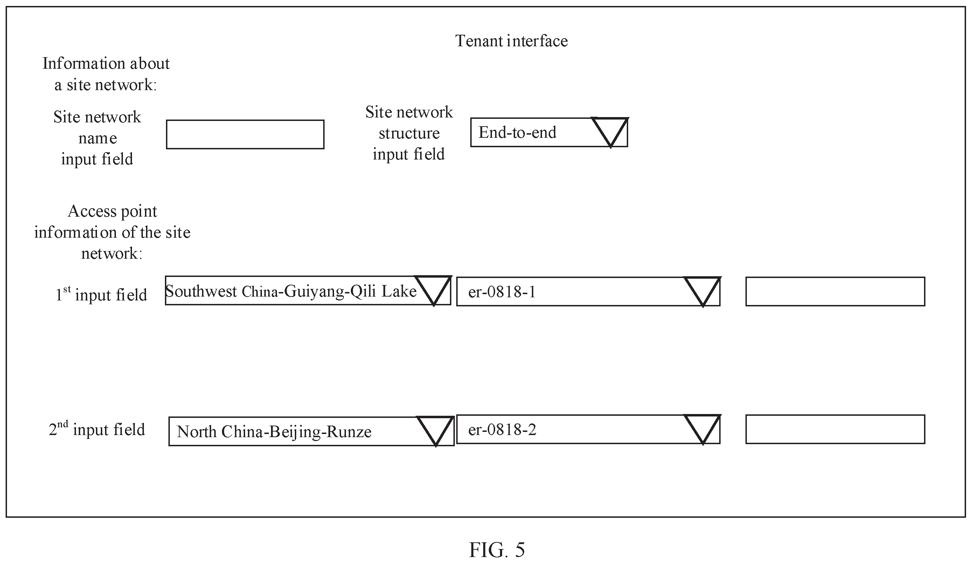

For example, as shown in FIG. 5 (FIG. 5 is a diagram of a tenant interface according to an embodiment of this application), when the tenant needs to construct a tenant-dedicated site network, the tenant may log in to the cloud management platform. The cloud management platform may provide a tenant interface for the tenant. The tenant may input the ID of the site network as site-work-fc25 in a site network name input field of the tenant interface. It is assumed that the tenant needs to connect a cluster 1 and a cluster 2, the cluster 1 is located in Qili Lake, Guiyang, and the cluster 2 is located in Runze, Beijing, and the tenant intends to form an end-to-end network between the two clusters. Therefore, the tenant may select and input the structure of the site network as the end-to-end structure from multiple structures provided in a site network structure input field. In this case, an access point information input field of the site network may include two input fields. In related information of multiple access points provided in a 1^{st} input field, the tenant may select and input, in the 1^{st} input field, an ID of a geographical area in which an access point 1 is located as Southwest China-Guiyang-Qili Lake, and select and input, in the 1^{st} input field, an ID of a virtual gateway 1 that may be created at the access point 1 as er-0818-1. In this case, the 1^{st} input field automatically generates an ID of the access point 1 as Guiyang 61238 (certainly, the ID may alternatively be set and input by the tenant independently). Similarly, in related information of multiple access points provided in a 2^{nd} input field, the tenant may select and input, in the 2^{nd} input field, an ID of a geographical area in which an access point 2 is located as North China-Beijing-Runze, and select and input, in the 2^{nd} input field, an ID of a virtual gateway 2 that may be created at the access point 2 as er-0818-2. In this case, the 2^{nd} input field automatically generates an ID of the access point 2 as Beijing 64512. In this case, information input by the tenant in various input fields may be aggregated into the configuration information of the site network of the tenant, and the configuration information is sent to the cloud management platform by using these input fields.

(2) If the tenant needs to create the site network for the first cluster, the second cluster, and a third cluster (located in a third geographical area) of the tenant, the tenant may select, from the multiple access points provided by the network creation interface, the first access point that is also located in the first geographical area, the second access point that is also located in the second geographical area, and a third access point that is also located in the third geographical area, and send the configuration information of the site network to the cloud management platform via the network creation interface. It can be learned that the configuration information of the site network may include the identifier of the site network of the tenant, the identifier of the first access point, and the identifier of the second access point, and also include an identifier of the third access point. It should be noted that, the identifier of the site network of the tenant is usually customized by the tenant and input to the network creation interface. The network creation interface may provide the tenant with identifiers of the multiple access points. The tenant may select and input the identifier of the first access point, the identifier of the second access point, and the identifier of the third access point from the identifiers of the multiple access points presented by the network creation interface. Therefore, the network creation interface may generate the configuration information of the site network of the tenant based on the identifier of the site network, the identifier of the first access point, the identifier of the second access point, and the identifier of the third access point that are input by the tenant, and send the configuration information to the cloud management platform.

The identifier of the site network may include various information set by the tenant for the site network of the tenant, for example, the ID set by the tenant for the site network of the tenant and the structure (for example, a mesh structure, a hybrid structure, and a star structure) set by the tenant for the site network of the tenant. The identifier of the first access point may include various information that may represent the first access point selected by the tenant, for example, the ID of the first geographical area in which the first access point is located, the ID of the first virtual gateway that may be created at the first access point, and the ID of the first access point. The identifier of the second access point may include various information that may represent the second access point selected by the tenant, for example, the ID of the second geographical area in which the second access point is located, the ID of the second virtual gateway that may be created at the second access point, and the ID of the second access point. The identifier of the third access point may include various information that may represent the third access point selected by the tenant, for example, an ID of the third geographical area in which the third access point is located, an ID of a third virtual gateway that may be created at the third access point, and an ID of the third access point.

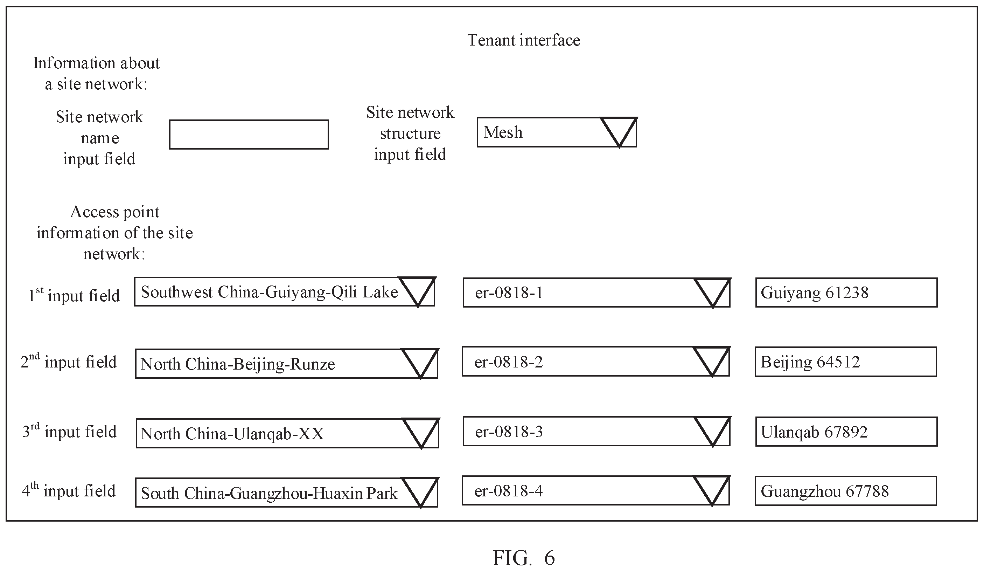

For example, as shown in FIG. 6 (FIG. 6 is another diagram of a tenant interface according to an embodiment of this application), when the tenant needs to construct a tenant-dedicated site network, the tenant may log in to the cloud management platform. The cloud management platform may provide a tenant interface for the tenant. The tenant may input the ID of the site network as site-work-fc25 in a site network name input field of the tenant interface. It is assumed that the tenant needs to connect to a cluster 1, a cluster 2, a cluster 3, and a cluster 4, the cluster 1 is located in Qili Lake, Guiyang, the cluster 2 is located in Runze, Beijing, the cluster 3 is located in XX, Ulanqab, the cluster 4 is located in Huaxin Park, Guangzhou, and the tenant intends to form a mesh network among the four clusters. Therefore, the tenant may select and input the structure of the site network as the mesh structure from multiple structures provided in a site network structure input field. In this case, an access point information input field of the site network may include four input fields. In related information of multiple access points provided in a 1^{st} input field, the tenant may select and input, in the 1^{st} input field, an ID of a geographical area in which an access point 1 is located as Southwest China-Guiyang-Qili Lake, and select and input, in the 1^{st} input field, an ID of a virtual gateway 1 that may be created at the access point 1 as er-0818-1. In this case, the 1^{st} input field automatically generates an ID of the access point 1 as Guiyang 61238. Similarly, in related information of multiple access points provided in a 2^{nd} input field, the tenant may select and input, in the 2^{nd} input field, an ID of a geographical area in which an access point 2 is located as North China-Beijing-Runze, and select and input, in the 2^{nd} input field, an ID of a virtual gateway 2 that may be created at the access point 2 as er-0818-2. In this case, the 2^{nd} input field automatically generates an ID of the access point 2 as Beijing 64512. Similarly, in related information of multiple access points provided in a 3^{rd} input field, the tenant may select and input, in the 3^{rd} input field, an ID of a geographical area in which an access point 3 is located as North China-Ulanqab-XX, and select and input, in the 3^{rd} input field, an ID of a virtual gateway 3 that may be created at the access point 3 as er-0818-3. In this case, the 3^{rd} input field automatically generates an ID of the access point 3 as Ulanqab 67892. Similarly, in related information of multiple access points provided in a 4^{th} input field, the tenant may select and input, in the 4^{th} input field, an ID of a geographical area in which an access point 4 is located as South China-Guangzhou-Huaxin Park, and select and input, in the 4^{th} input field, an ID of a virtual gateway 4 that may be created at the access point 4 as er-0818-4. In this case, the 4^{th} input field automatically generates an ID of the access point 4 as Guangzhou 67788. In this case, information input by the tenant in various input fields may be aggregated into the configuration information of the site network of the tenant, and the configuration information is sent to the cloud management platform by using these input fields.

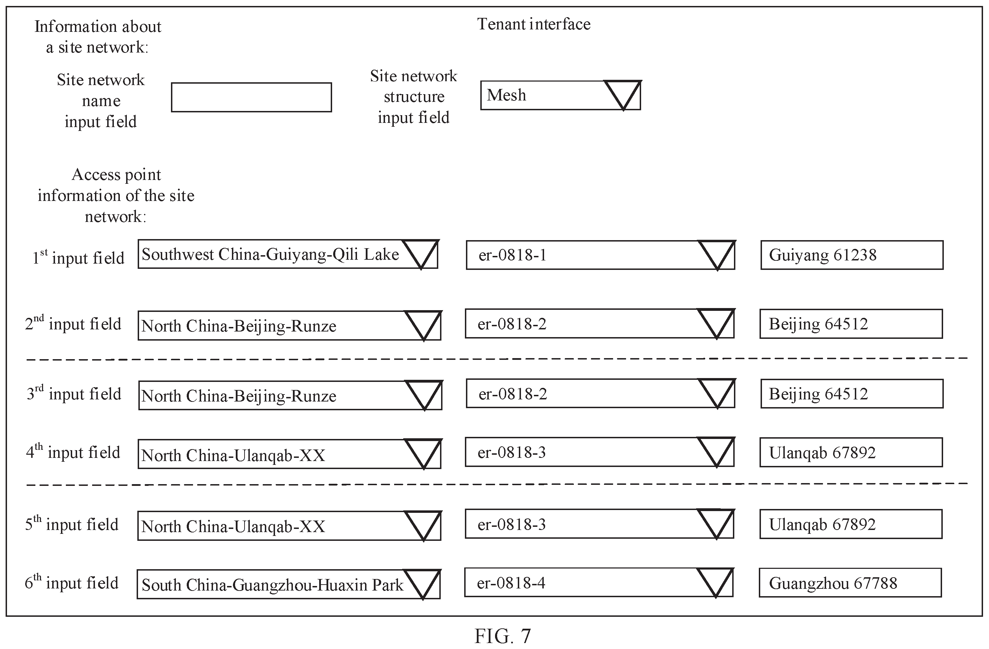

For another example, as shown in FIG. 7 (FIG. 7 is another diagram of a tenant interface according to an embodiment of this application), when the tenant needs to construct a tenant-dedicated site network, the tenant may log in to the cloud management platform. The cloud management platform may provide a tenant interface for the tenant. The tenant may input the ID of the site network as site-work-fc25 in a site network name input field of the tenant interface. It is assumed that the tenant needs to connect to a cluster 1, a cluster 2, a cluster 3, and a cluster 4, the cluster 1 is located in Qili Lake, Guiyang, the cluster 2 is located in Runze, Beijing, the cluster 3 is located in XX, Ulanqab, the cluster 4 is located in Huaxin Park, Guangzhou, and the tenant intends to form a hybrid network among the four clusters. Therefore, the tenant may select and input the structure of the site network as the hybrid structure from multiple structures provided in a site network structure input field. In this case, an access point information input field of the site network may include six input fields in pairs, where a 1^{st} input field and a 2^{nd} input field are paired (indicating that access points of the two input fields are connected), a 3^{rd} input field and a 4^{th} input field are paired (indicating that access points of the two input fields are connected), and a 5^{th} input field and a 6^{th} input field are paired (indicating that access points of the two input fields are connected). In related information of multiple access points provided in the 1^{st} input field, the tenant may select and input, in the 1^{st} input field, an ID of a geographical area in which an access point 1 is located as Southwest China-Guiyang-Qili Lake, and select and input, in the 1^{st} input field, an ID of a virtual gateway 1 that may be created at the access point 1 as er-0818-1. In this case, the 1^{st} input field automatically generates an ID of the access point 1 as Guiyang 61238. Similarly, in related information of multiple access points provided in the 2^{nd} input field, the tenant may select and input, in the 2^{nd} input field, an ID of a geographical area in which an access point 2 is located as North China-Beijing-Runze, and select and input, in the 2^{nd} input field, an ID of a virtual gateway 2 that may be created at the access point 2 as er-0818-2. In this case, the 2^{nd} input field automatically generates an ID of the access point 2 as Beijing 64512. It should be noted that information in the 3^{rd} input field is the same as information in the 2^{nd} input field, and details are not described herein again. Similarly, in related information of multiple access points provided in the 4^{th} input field, the tenant may select and input, in the 4^{th} input field, an ID of a geographical area in which an access point 3 is located as North China-Ulanqab-XX, and select and input, in the 4^{th} input field, an ID of a virtual gateway 3 that may be created at the access point 3 as er-0818-3. In this case, the 4^{th} input field automatically generates an ID of the access point 3 as Ulanqab 67892. It should be noted that information in the 5^{th} input field is the same as information in the 4^{th} input field, and details are not described herein again. Similarly, in related information of multiple access points provided in a 6^{th} input field, the tenant may select and input, in the 6^{th} input field, an ID of a geographical area in which an access point 4 is located as South China-Guangzhou-Huaxin Park, and select and input, in the 6^{th} input field, an ID of a virtual gateway 4 that may be created at the access point 4 as er-0818-4. In this case, the 6^{th} input field automatically generates an ID of the access point 4 as Guangzhou 67788. In this case, information input by the tenant in various input fields may be aggregated into the configuration information of the site network of the tenant, and the configuration information is sent to the cloud management platform by using these input fields.

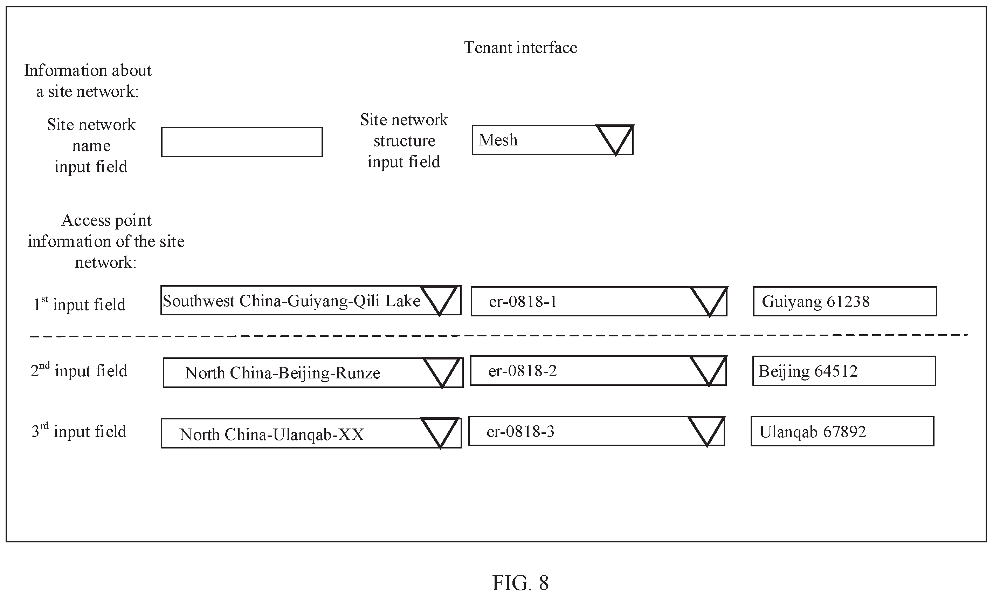

For another example, as shown in FIG. 8 (FIG. 8 is another diagram of a tenant interface according to an embodiment of this application), when the tenant needs to construct a tenant-dedicated site network, the tenant may log in to the cloud management platform. The cloud management platform may provide a tenant interface for the tenant. The tenant may input the ID of the site network as site-work-fc25 in a site network name input field of the tenant interface. It is assumed that the tenant needs to connect a cluster 1, a cluster 2, and a cluster 3, the cluster 1 is located in Qili Lake, Guiyang, the cluster 2 is located in Runze, Beijing, the cluster 3 is located in XX, Ulanqab, and the tenant intends to form a star network among the three clusters. Therefore, the tenant may select and input the structure of the site network as the star structure from multiple structures provided in a site network structure input field. In this case, an access point information input field of the site network may include three input fields, where a 1^{st} input field is a central input field of the star structure, and a 2^{nd} input field and a 3^{rd} input field are radiation input fields of the star structure. Therefore, in related information of multiple access points provided in the 1^{st} input field, the tenant may select and input, in the 1^{st} input field, an ID of a geographical area in which an access point 1 is located as Southwest China-Guiyang-Qili Lake, and select and input, in the 1^{st} input field, an ID of a virtual gateway 1 that may be created at the access point 1 as er-0818-1. In this case, the 1^{st} input field automatically generates an ID of the access point 1 as Guiyang 61238. Similarly, in related information of multiple access points provided in the 2^{nd} input field, the tenant may select and input, in the 2^{nd} input field, an ID of a geographical area in which an access point 2 is located as North China-Beijing-Runze, and select and input, in the 2^{nd} input field, an ID of a virtual gateway 2 that may be created at the access point 2 as er-0818-2. In this case, the 2^{nd} input field automatically generates an ID of the access point 2 as Beijing 64512. Similarly, in related information of multiple access points provided in the 3^{rd} input field, the tenant may select and input, in the 3^{rd} input field, an ID of a geographical area in which an access point 3 is located as North China-Ulanqab-XX, and select and input, in the 3^{rd} input field, an ID of a virtual gateway 3 that may be created at the access point 3 as er-0818-3. In this case, the 3^{rd} input field automatically generates an ID of the access point 3 as Ulanqab 67892. In this case, information input by the tenant in various input fields may be aggregated into the configuration information of the site network of the tenant, and the configuration information is sent to the cloud management platform by using these input fields.

402: The cloud management platform creates, based on the configuration information, the first virtual gateway of the tenant in a first physical gateway of the first access point, and the second virtual gateway of the tenant in a second physical gateway of the second access point.

After obtaining the configuration information of the site network of the tenant, the cloud management platform may determine, based on the configuration information, that the tenant needs to construct the tenant-dedicated site network between the first access point and the second access point. In this case, the cloud management platform may find the first access point and the second access point from the multiple access points, create the first virtual gateway dedicated to serving the tenant in the first physical gateway of the first access point, and create the second virtual gateway dedicated to serving the tenant in the second physical gateway of the second access point.

It should be noted that, if the cloud management platform determines, based on the configuration information, that the tenant needs to construct the tenant-dedicated site network between the first access point, the second access point, and the third access point, that is, the configuration information indicates the first access point and the second access point, and also indicates the third access point, the cloud management platform may find the first access point, the second access point, and the third access point from the multiple access points, create the first virtual gateway dedicated to serving the tenant in the first physical gateway of the first access point, create the second virtual gateway dedicated to serving the tenant in the second physical gateway of the second access point, and create the third virtual gateway dedicated to serving the tenant in a third physical gateway of the third access point.

403: The cloud management platform constructs the site network between the first virtual gateway and the second virtual gateway, where the first virtual gateway is used by the first cluster of the tenant to access the site network, the second virtual gateway is used by the second cluster of the tenant to access the site network, the first cluster and the second cluster each include multiple physical servers, the first cluster is located in the first geographical area in which the first access point is located, and the second cluster is located in the second geographical area in which the second access point is located.

After obtaining the first virtual gateway and the second virtual gateway, the cloud management platform may construct the tenant-dedicated site network between the first virtual gateway and the second virtual gateway. Because (the first access point of) the first virtual gateway and the first cluster of the tenant are both located in the first geographical area, and (the second access point of) the second virtual gateway and the second cluster of the tenant are both located in the second geographical area, the tenant enables the first cluster to access the first virtual gateway, so that the first cluster accesses the site network of the tenant through the first virtual gateway, and the tenant enables the second cluster to access the second virtual gateway, so that the second cluster accesses the site network of the tenant through the second virtual gateway. In this way, the first cluster and the second cluster may communicate with each other via the site network of the tenant.

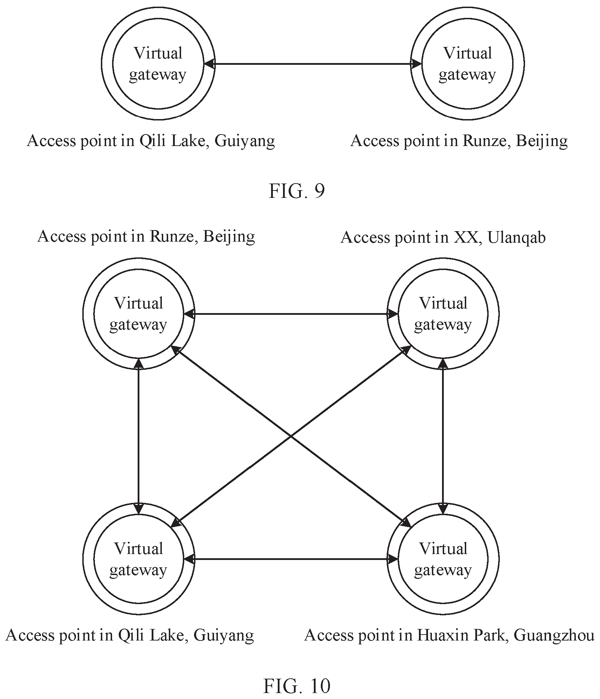

Specifically, the cloud management platform may create the site network of the tenant between the first virtual gateway and the second virtual gateway in the following multiple manners.
(1) If the configuration information of the site network of the tenant indicates that the structure of the site network of the tenant is the end-to-end structure (which may also be referred to as a point-to-point structure), the cloud management platform may use the first virtual gateway and the second virtual gateway as two endpoints of the site network of the tenant, to directly establish the communication connection between the first virtual gateway and the second virtual gateway, and obtain the site network of the tenant.
   Still in the example shown in FIG. 5, after receiving the configuration information, because the configuration information indicates that the structure of the site network of the tenant is the end-to-end structure, the cloud management platform may create a virtual gateway 1 in a physical gateway of the access point 1 indicated by the configuration information, create a virtual gateway 2 in a physical gateway of the access point 2 indicated by the configuration information, and establish a communication connection between the virtual gateway 1 and the virtual gateway 2. Therefore, the site network shown in FIG. 9 is constructed between the virtual gateway 1 and the virtual gateway 2. FIG. 9 is a diagram of a site network according to an embodiment of this application. In this case, the tenant enables the cluster 1 to access the site network through the virtual gateway 1, and enables the cluster 2 to access the site network through the virtual gateway 2, so that the cluster 1 and the cluster 2 communicate with each other via the site network.
(2) If the configuration information of the site network of the tenant indicates that the structure of the site network of the tenant is the mesh structure, the cloud management platform may use every two of the first virtual gateway, the second virtual gateway, and the third virtual gateway as endpoints for arbitrary intercommunication in the site network of the tenant, to establish the communication connection between every two of the first virtual gateway, the second virtual gateway, and the third virtual gateway, and obtain the site network of the tenant.

Because the first virtual gateway and the first cluster of the tenant are both located in the first geographical area, the second virtual gateway and the second cluster of the tenant are both located in the second geographical area, and the third virtual gateway and the third cluster of the tenant are both located in the third geographical area, the tenant enables the first cluster to access the first virtual gateway, so that the first cluster accesses the site network through the first virtual gateway, the tenant enables the second cluster to access the second virtual gateway, so that the second cluster accesses the site network through the second virtual gateway, and the tenant enables the third cluster to access the third virtual gateway, so that the third cluster accesses the site network through the third virtual gateway. In this way, the first cluster, the second cluster, and the third cluster may communicate with each other via the site network.

Still in the example shown in FIG. 6, after receiving the configuration information, because the configuration information indicates that the structure of the site network of the tenant is the mesh structure, the cloud management platform may create a virtual gateway 1 in a physical gateway of the access point 1 indicated by the configuration information, create a virtual gateway 2 in a physical gateway of the access point 2 indicated by the configuration information, create a virtual gateway 3 in a physical gateway of the access point 3 indicated by the configuration information, create a virtual gateway 4 in a physical gateway of the access point 4 indicated by the configuration information, and establish a communication connection between every two of the virtual gateway 1, the virtual gateway 2, the virtual gateway 3, and the virtual gateway 4. Therefore, the site network shown in FIG. 10 is constructed among the virtual gateway 1, the virtual gateway 2, the virtual gateway 3, and the virtual gateway 4. FIG. 10 is another diagram of a site network according to an embodiment of this application. In this case, the tenant enables the cluster 1 to access the site network through the virtual gateway 1, enables the cluster 2 to access the site network through the virtual gateway 2, enables the cluster 3 to access the site network through the virtual gateway 3, and enables the cluster 4 to access the site network through the virtual gateway 4, so that the cluster 1, the cluster 2, the cluster 3, and the cluster 4 communicate with each other via the site network.

(3) If the configuration information of the site network of the tenant indicates that the structure of the site network of the tenant is the hybrid structure, the cloud management platform may use the first virtual gateway, the second virtual gateway, and the third virtual gateway as endpoints sequentially connected in the site network of the tenant, to establish the communication connection between the first virtual gateway and the second virtual gateway, and the communication connection between the second virtual gateway and the third virtual gateway, and obtain the site network of the tenant.

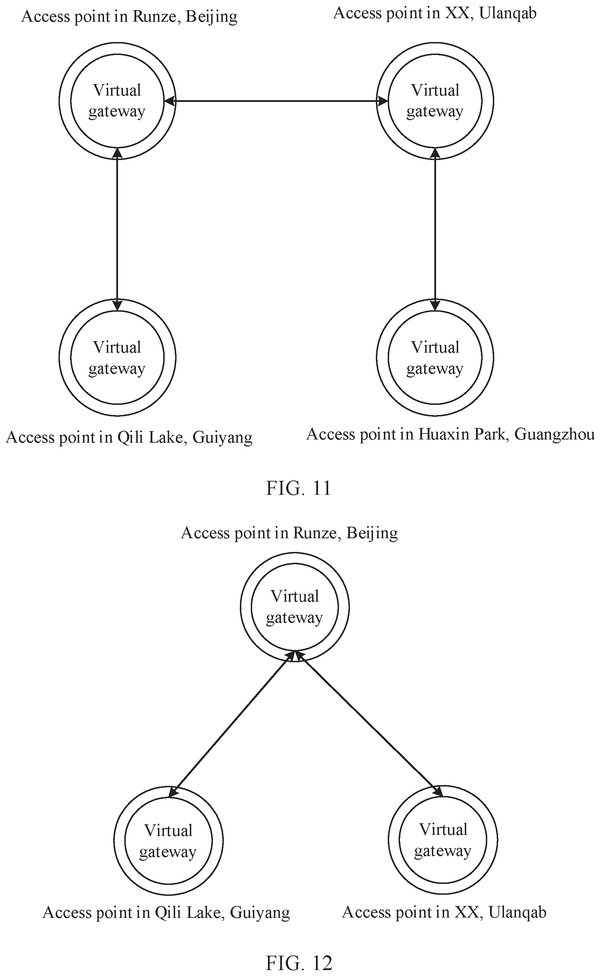

Still in the example shown in FIG. 7, after receiving the configuration information, because the configuration information indicates that the structure of the site network of the tenant is the mesh structure, the cloud management platform may create a virtual gateway 1 in a physical gateway of the access point 1 indicated by the configuration information, create a virtual gateway 2 in a physical gateway of the access point 2 indicated by the configuration information, create a virtual gateway 3 in a physical gateway of the access point 3 indicated by the configuration information, create a virtual gateway 4 in a physical gateway of the access point 4 indicated by the configuration information, and establish a communication connection between the virtual gateway 1, the virtual gateway 2, the virtual gateway 3, and the virtual gateway 4 in sequence. Therefore, the site network shown in FIG. 11 is constructed among the virtual gateway 1, the virtual gateway 2, the virtual gateway 3, and the virtual gateway 4. FIG. 11 is another diagram of a site network according to an embodiment of this application. In this case, the tenant enables the cluster 1 to access the site network through the virtual gateway 1, enables the cluster 2 to access the site network through the virtual gateway 2, enables the cluster 3 to access the site network through the virtual gateway 3, and enables the cluster 4 to access the site network through the virtual gateway 4, so that the cluster 1, the cluster 2, the cluster 3, and the cluster 4 communicate with each other via the site network.

(4) If the configuration information of the site network of the tenant indicates that the structure of the site network of the tenant is the star structure, the cloud management platform may use the first virtual gateway as a central point in the site network of the tenant, and use the second virtual gateway and the third virtual gateway as extension points in the site network, to establish the communication connection between the first virtual gateway and the second virtual gateway, and the communication connection between the first virtual gateway and the third virtual gateway, and obtain the site network of the tenant.

Still in the example shown in FIG. 8, after receiving the configuration information, because the configuration information indicates that the structure of the site network of the tenant is the star structure, the cloud management platform may create a virtual gateway 1 in a physical gateway of the access point 1 indicated by the configuration information, create a virtual gateway 2 in a physical gateway of the access point 2 indicated by the configuration information, create a virtual gateway 3 in a physical gateway of the access point 3 indicated by the configuration information, and establish a communication connection between the virtual gateway 1 and the virtual gateway 2, and a communication connection between the virtual gateway 1 and the virtual gateway 3, by using the virtual gateway 1 as a center of the site network and using the virtual gateway 2 and the virtual gateway 3 as extension of the site network. Therefore, the site network shown in FIG. 12 is constructed among the virtual gateway 1, the virtual gateway 2, and the virtual gateway 3. FIG. 12 is another diagram of a site network according to an embodiment of this application. In this case, the tenant enables the cluster 1 to access the site network through the virtual gateway 1, enables the cluster 2 to access the site network through the virtual gateway 2, and enables the cluster 3 to access the site network through the virtual gateway 3, so that the cluster 1, the cluster 2, and the cluster 3 communicate with each other via the site network.

In embodiments of this application, when the tenant needs to create the site network for the first cluster of the tenant and the second cluster of the tenant, the tenant may input the configuration information of the site network to the network creation interface provided by the cloud management platform, so that the cloud management platform may receive the configuration information of the site network via the network creation interface, where the configuration information indicates the first access point and the second access point that are selected by the tenant from the multiple access points. Then, the cloud management platform may create, based on the configuration information, the first virtual gateway dedicated to serving the tenant in the first physical gateway of the first access point, and the second virtual gateway dedicated to serving the tenant in the second physical gateway of the second access point. Then, the cloud management platform may construct the tenant-dedicated site network between the first virtual gateway and the second virtual gateway. Because the first access point at which the first virtual gateway is located and the first cluster of the tenant are both located in the first geographical area, and the second access point at which the second virtual gateway is located and the second cluster of the tenant are both located in the second geographical area, the tenant enables the first cluster to access the site network through the first virtual gateway, and enables the second cluster to access the site network through the second virtual gateway. In this way, the first cluster and the second cluster may communicate with each other via the site network. In the foregoing process, the cloud management platform may create virtual gateways (that is, the first virtual gateway and the second virtual gateway) at several access points (that is, the first access point and the second access point) independently selected by the tenant, to construct a tenant-dedicated site network between the virtual gateways at the several access points. The several access points are selected by the tenant based on geographical areas in which several clusters (that is, the first cluster and the second cluster) to be connected are located, in other words, geographical areas (that is, the first geographical area and the second geographical area) in which the several access points are located respectively overlap the geographical areas (that is, the first geographical area and the second geographical area) in which the several clusters of the tenant are located. Therefore, after the several clusters of the tenant access the site network of the tenant through the virtual gateways of the several access points respectively to implement intercommunication, traffic between the clusters does not need to detour around the geographical area during communication, thereby improving communication latency between the clusters of the tenant.

Further, in embodiments of this application, the cloud management platform provides, via the network creation interface, the multiple access points available for the tenant to select. After selecting access points, the tenant may further define the structure of the site network at the network creation interface, for example, the end-to-end structure, the mesh structure, the hybrid structure, and the star structure, to meet various setting requirements of the tenant for the site network and adapt to requirements of the tenant in different scenarios.

Further, in embodiments of this application, the cloud management platform may further present, via the network creation interface, the site network of the tenant to the tenant for viewing and adjustment by using a topology diagram and a Json/Yaml template, to facilitate management of the site network of the tenant and improve experience of the tenant.

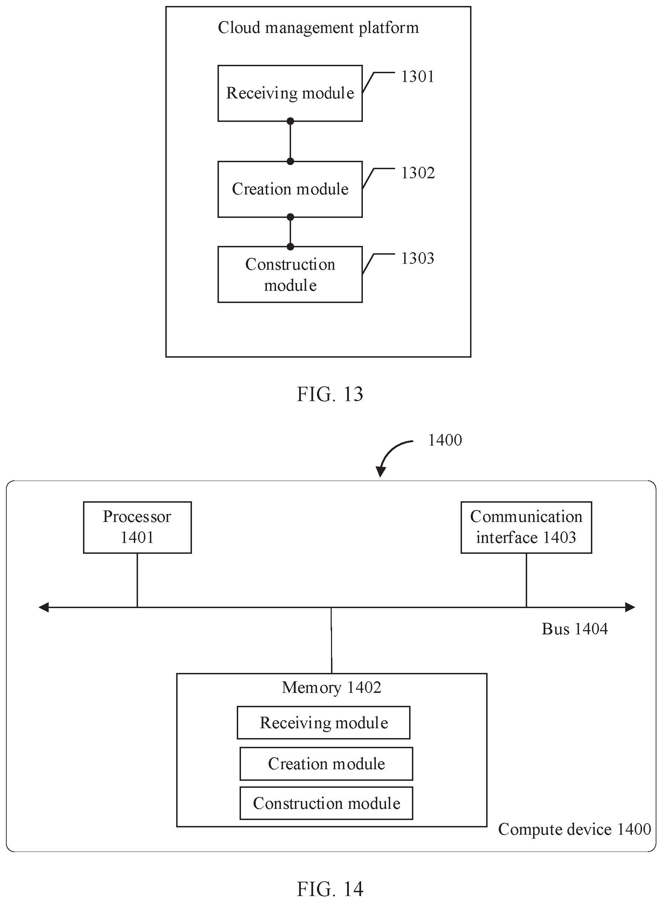

The foregoing is detailed descriptions of the network creation method based on the cloud management platform provided in embodiments of this application. The following describes the cloud management platform provided in embodiments of this application. FIG. 13 is a diagram of a structure of a cloud management platform according to an embodiment of this application. As shown in FIG. 13, the cloud management platform is configured to manage multiple access points capable of constructing a site network of a tenant, the multiple access points are located in different geographical areas, and the cloud management platform includes:

A receiving module 1301 is configured to receive, via a network creation interface, configuration information of the site network sent by the tenant, where the configuration information indicates a first access point and a second access point that are selected by the tenant from the multiple access points to construct the site network. For example, the receiving module 1301 is configured to implement step 401 in the embodiment shown in FIG. 4.

A creation module 1302 is configured to create, based on the configuration information, a first virtual gateway of the tenant in a first physical gateway of the first access point, and a second virtual gateway of the tenant in a second physical gateway of the second access point. For example, the creation module 1302 is configured to implement step 402 in the embodiment shown in FIG. 4.

A construction module 1303 is configured to construct the site network between the first virtual gateway and the second virtual gateway. For example, the construction module 1303 is configured to implement step 403 in the embodiment shown in FIG. 4.

The first virtual gateway is used by a first cluster of the tenant to access the site network, the second virtual gateway is used by a second cluster of the tenant to access the site network, the first cluster and the second cluster each include multiple physical servers, the first cluster is located in a first geographical area in which the first access point is located, and the second cluster is located in a second geographical area in which the second access point is located.

In a possible implementation, the configuration information includes an identifier of the site network, an identifier of the first access point, and an identifier of the second access point; the identifier of the site network includes an identity (ID) of the site network and a structure of the site network; the identifier of the first access point includes an ID of the first geographical area, an ID of the first virtual gateway, and an ID of the first access point; and the identifier of the second access point includes an ID of the second geographical area, an ID of the second virtual gateway, and an ID of the second access point.

In a possible implementation, the construction module 1303 is configured to establish a communication connection between the first virtual gateway and the second virtual gateway to obtain the site network.

In a possible implementation, the structure of the site network is a mesh structure, the configuration information further indicates a third access point for constructing the site network, and the construction module 1303 is configured to establish a communication connection between every two of the first virtual gateway, the second virtual gateway, and a third virtual gateway of the third access point to obtain the site network, where the third virtual gateway is used by a third cluster of the tenant to access the site network, the third cluster includes multiple physical servers, and the third cluster is located in a third geographical area in which the third access point is located.

In a possible implementation, the structure of the site network is a hybrid structure, the configuration information further indicates a third access point for constructing the site network, and the construction module 1303 is configured to establish a communication connection between the first virtual gateway and the second virtual gateway, and a communication connection between the second virtual gateway and a third virtual gateway of the third access point, to obtain the site network, where the third virtual gateway is used by a third cluster of the tenant to access the site network, the third cluster includes multiple physical servers, and the third cluster is located in a third geographical area in which the third access point is located.

In a possible implementation, the structure of the site network is a star structure, the configuration information further indicates a third access point for constructing the site network, and the construction module 1303 is configured to establish a communication connection between the first virtual gateway and the second virtual gateway, and a communication connection between the first virtual gateway and a third virtual gateway of the third access point, to obtain the site network, where the third virtual gateway is used by a third cluster of the tenant to access the site network, the third cluster includes multiple physical servers, and the third cluster is located in a third geographical area in which the third access point is located.

In a possible implementation, the communication connection is implemented based on a cloud backbone network.

In a possible implementation, the first access point and the second access point are any one of the following: a region, an availability zone, a data center, and an equipment room.

It should be noted that, because content such as information exchange between the modules/units of the apparatus and the implementation processes is based on the same concept as the method embodiments of this application, technical effects brought are the same as those of the method embodiments of this application. For specific content, refer to the descriptions in the method embodiment shown above in embodiments of this application. Details are not described herein again.

FIG. 14 is a diagram of a structure of a compute device according to an embodiment of this application. As shown in FIG. 14, the compute device 1400 (which may be configured to present the foregoing cloud management platform) includes a processor 1401, a memory 1402, a communication interface 1403, and a bus 1404. The processor 1401, the memory 1402, and the communication interface 1403 are coupled through a bus (not marked in the figure). The memory 1402 stores instructions. When executable instructions in the memory 1402 are executed, the compute device 1400 performs the method performed by the cloud management platform in the foregoing method embodiment.

The compute device 1400 may be one or more integrated circuits configured to perform the foregoing method, for example, one or more application-specific integrated circuits (application-specific integrated circuit, ASIC), one or more digital signal processors(digital signal processor, DSP), one or more field programmable gate arrays (field programmable gate array, FPGA), or a combination of at least two of these integrated circuit forms. For another example, when units in an apparatus are implemented in a form of scheduling a program by a processing element, the processing element may be a general-purpose processor, for example, a central processing unit (central processing unit, CPU) or another processor that can invoke a program. For another example, the units may be integrated and implemented in a form of a system-on-a-chip (system-on-a-chip, SoC).

The processor 1401 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any conventional processor, or the like.

The memory 1402 may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1402 stores executable program code, and the processor 1401 executes the executable program code to separately implement functions of the foregoing modules such as the receiving module, the creation module, and the construction module, to implement the foregoing network creation method based on the cloud management platform. In other words, the memory 1402 stores instructions used to perform the foregoing network creation method based on the cloud management platform.

The communication interface 1403 uses a transceiver module, for example but not limited to, a network interface card or a transceiver, to implement communication between the compute device 1400 and another device or a communication network.

In addition to a data bus, the bus 1404 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

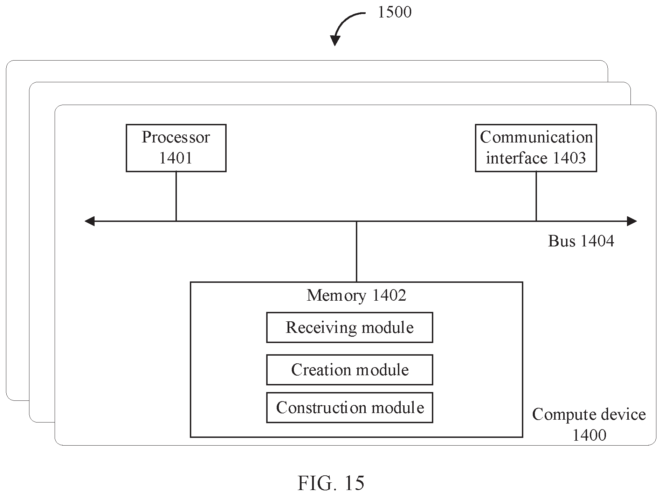

FIG. 15 is a diagram of a structure of a compute device cluster according to an embodiment of this application. As shown in FIG. 15, the compute device cluster 1500 includes at least one compute device 1400.

As shown in FIG. 15, the compute device cluster 1500 includes at least one compute device 1400. A memory 1402 in the one or more compute devices 1400 in the compute device cluster 1500 may store same instructions for performing the foregoing network creation method based on the cloud management platform.

In some possible implementations, alternatively, the memory 1402 in the one or more compute devices 1400 in the compute device cluster 1500 may separately store some instructions for performing the foregoing network creation method based on the cloud management platform. In other words, a combination of the one or more compute devices 1400 may jointly perform the foregoing network creation method based on the cloud management platform.

It should be noted that memories 1402 in different compute devices 1400 in the compute device cluster 1500 may store different instructions, to separately perform some functions of the foregoing cloud management platform. In other words, instructions stored in the memories 1402 in different compute devices 1400 may implement functions of one or more of modules such as the receiving module, the creation module, and the construction module.

In some possible implementations, the one or more compute devices 1400 in the compute device cluster 1500 may be connected via a network. The network may be a wide area network, a local area network, or the like.

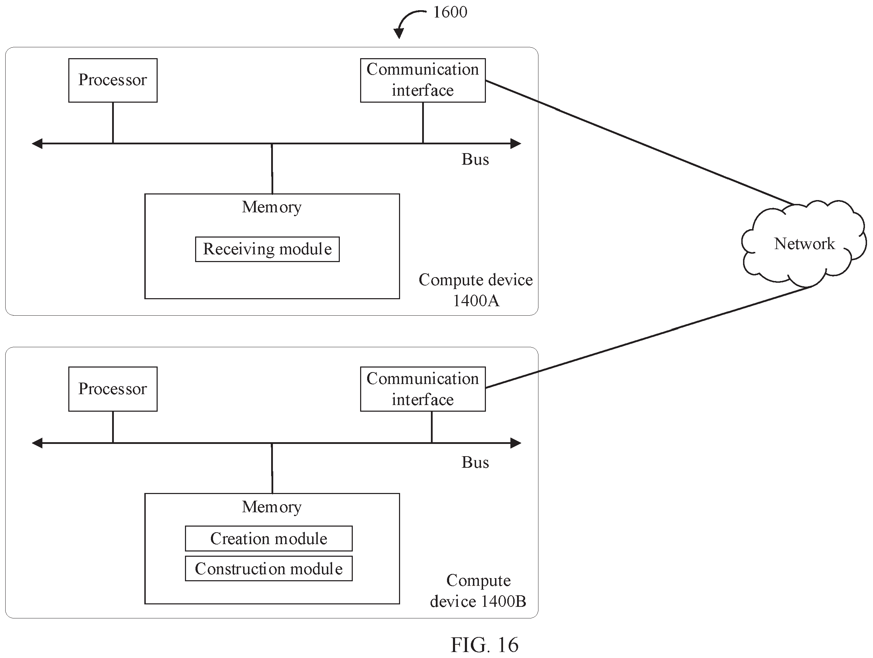

FIG. 16 is a diagram in which computer devices in a computer cluster are connected via a network according to an embodiment of this application. As shown in FIG. 16, two compute devices 1400A and 1400B are connected via a network. Specifically, each compute device is connected to the network through a communication interface in the compute device.

In a possible implementation, a memory in the compute device 1400A stores instructions for performing functions of modules such as the receiving module. In addition, a memory in the compute device 1400B stores instructions for performing functions of modules such as the creation module and the construction module.

It should be understood that functions of the compute device 1400A shown in FIG. 16 may alternatively be completed by multiple compute devices. Similarly, functions of the compute device 1400B may alternatively be completed by multiple compute devices.

An embodiment of this application further relates to a computer-readable storage medium. The computer-readable storage medium stores a program used for signal processing. When the program is run on a computer, the computer is enabled to perform the steps performed by the cloud management platform in the embodiment shown in FIG. 4.

An embodiment of this application further relates to a computer program product. The computer program product stores instructions, and when the instructions are executed by a computer, the computer is enabled to perform the steps performed by the cloud management platform in the embodiment shown in FIG. 4.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, multiple units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A network creation method based on a cloud management platform, wherein the cloud management platform is configured to manage multiple access points capable of constructing a site network of a tenant, the multiple access points are located in different geographical areas, and the method comprises:
receiving, by the cloud management platform via a network creation interface, configuration information of the site network sent by the tenant, wherein the configuration information indicates a first access point and a second access point that are selected by the tenant from the multiple access points to construct the site network;
creating, by the cloud management platform based on the configuration information, a first virtual gateway of the tenant in a first physical gateway of the first access point, and a second virtual gateway of the tenant in a second physical gateway of the second access point; and
constructing, by the cloud management platform, the site network between the first virtual gateway and the second virtual gateway, wherein
the first virtual gateway is used by a first cluster of the tenant to access the site network, the second virtual gateway is used by a second cluster of the tenant to access the site network, the first cluster and the second cluster each comprise multiple physical servers, the first cluster is located in a first geographical area in which the first access point is located, and the second cluster is located in a second geographical area in which the second access point is located.

2. The method according to claim 1, wherein the configuration information comprises an identifier of the site network, an identifier of the first access point, and an identifier of the second access point;
the identifier of the site network comprises an identity (ID) of the site network and a structure of the site network;
the identifier of the first access point comprises an ID of the first geographical area, an ID of the first virtual gateway, and an ID of the first access point; and
the identifier of the second access point comprises an ID of the second geographical area, an ID of the second virtual gateway, and an ID of the second access point.

3. The method according to claim 2, wherein the structure of the site network is an end-to-end structure, and constructing, by the cloud management platform, the site network between the first virtual gateway and the second virtual gateway comprises:
establishing, by the cloud management platform, a communication connection between the first virtual gateway and the second virtual gateway to obtain the site network.

4. The method according to claim 2, wherein the structure of the site network is a mesh structure, the configuration information further indicates a third access point for constructing the site network, and constructing, by the cloud management platform, the site network between the first virtual gateway and the second virtual gateway comprises:
establishing, by the cloud management platform, a communication connection between every two of the first virtual gateway, the second virtual gateway, and a third virtual gateway of the third access point to obtain the site network, wherein
the third virtual gateway is used by a third cluster of the tenant to access the site network, the third cluster comprises multiple physical servers, and the third cluster is located in a third geographical area in which the third access point is located.

5. The method according to claim 2, wherein the structure of the site network is a hybrid structure, the configuration information further indicates a third access point for constructing the site network, and constructing, by the cloud management platform, the site network between the first virtual gateway and the second virtual gateway comprises:
establishing, by the cloud management platform, a communication connection between the first virtual gateway and the second virtual gateway, and a communication connection between the second virtual gateway and a third virtual gateway of the third access point, to obtain the site network, wherein
the third virtual gateway is used by a third cluster of the tenant to access the site network, the third cluster comprises multiple physical servers, and the third cluster is located in a third geographical area in which the third access point is located.

6. The method according to claim 2, wherein the structure of the site network is a star structure, the configuration information further indicates a third access point for constructing the site network, and constructing, by the cloud management platform, the site network between the first virtual gateway and the second virtual gateway comprises:
establishing, by the cloud management platform, a communication connection between the first virtual gateway and the second virtual gateway, and a communication connection between the first virtual gateway and a third virtual gateway of the third access point, to obtain the site network, wherein
the third virtual gateway is used by a third cluster of the tenant to access the site network, the third cluster comprises multiple physical servers, and the third cluster is located in a third geographical area in which the third access point is located.

7. The method according to any one of claims 3 to 6, wherein the communication connection is implemented based on a cloud backbone network.

8. The method according to any one of claims 1 to 7, wherein the first access point and the second access point are any one of the following: a region, an availability zone, a data center, and an equipment room.

9. A cloud management platform, wherein the cloud management platform is configured to manage multiple access points capable of constructing a site network of a tenant, the multiple access points are located in different geographical areas, and the cloud management platform comprises:
a receiving module, configured to receive, via a network creation interface, configuration information of the site network sent by the tenant, wherein the configuration information indicates a first access point and a second access point that are selected by the tenant from the multiple access points to construct the site network;
a creation module, configured to create, based on the configuration information, a first virtual gateway of the tenant in a first physical gateway of the first access point, and a second virtual gateway of the tenant in a second physical gateway of the second access point; and
a construction module, configured to construct the site network between the first virtual gateway and the second virtual gateway, wherein
the first virtual gateway is used by a first cluster of the tenant to access the site network, the second virtual gateway is used by a second cluster of the tenant to access the site network, the first cluster and the second cluster each comprise multiple physical servers, the first cluster is located in a first geographical area in which the first access point is located, and the second cluster is located in a second geographical area in which the second access point is located.

10. The cloud management platform according to claim 9, wherein the configuration information comprises an identifier of the site network, an identifier of the first access point, and an identifier of the second access point;
the identifier of the site network comprises an identity (ID) of the site network and a structure of the site network;
the identifier of the first access point comprises an ID of the first geographical area, an ID of the first virtual gateway, and an ID of the first access point; and
the identifier of the second access point comprises an ID of the second geographical area, an ID of the second virtual gateway, and an ID of the second access point.

11. The cloud management platform according to claim 10, wherein the construction module is configured to establish a communication connection between the first virtual gateway and the second virtual gateway to obtain the site network.

12. The cloud management platform according to claim 10, wherein the structure of the site network is a mesh structure, the configuration information further indicates a third access point for constructing the site network, and the construction module is configured to establish a communication connection between every two of the first virtual gateway, the second virtual gateway, and a third virtual gateway of the third access point to obtain the site network, wherein
the third virtual gateway is used by a third cluster of the tenant to access the site network, the third cluster comprises multiple physical servers, and the third cluster is located in a third geographical area in which the third access point is located.

13. The cloud management platform according to claim 10, wherein the structure of the site network is a hybrid structure, the configuration information further indicates a third access point for constructing the site network, and the construction module is configured to establish a communication connection between the first virtual gateway and the second virtual gateway, and a communication connection between the second virtual gateway and a third virtual gateway of the third access point, to obtain the site network, wherein
the third virtual gateway is used by a third cluster of the tenant to access the site network, the third cluster comprises multiple physical servers, and the third cluster is located in a third geographical area in which the third access point is located.

14. The cloud management platform according to claim 10, wherein the structure of the site network is a star structure, the configuration information further indicates a third access point for constructing the site network, and the construction module is configured to establish a communication connection between the first virtual gateway and the second virtual gateway, and a communication connection between the first virtual gateway and a third virtual gateway of the third access point, to obtain the site network, wherein
the third virtual gateway is used by a third cluster of the tenant to access the site network, the third cluster comprises multiple physical servers, and the third cluster is located in a third geographical area in which the third access point is located.

15. The cloud management platform according to any one of claims 11 to 14, wherein the communication connection is implemented based on a cloud backbone network.

16. The cloud management platform according to any one of claims 9 to 15, wherein the first access point and the second access point are any one of the following: a region, an availability zone, a data center, and an equipment room.

17. A compute device cluster, wherein the compute device cluster comprises at least one compute device, and each compute device comprises a processor and a memory, wherein
the memory is configured to store instructions; and
the processor is configured to enable, according to the instructions, the compute device cluster to perform the method according to any one of claims 1 to 8.

18. A computer storage medium, wherein the computer storage medium stores one or more instructions, and when the instructions are executed by one or more computers, the one or more computers are enabled to perform the method according to any one of claims 1 to 8.

19. A computer program product, wherein the computer program product stores instructions, and when the instructions are executed by a computer, the computer is enabled to perform the method according to any one of claims 1 to 8.
